# EUROPEAN PATENT APPLICATION

(11) **EP 4 831 871 A1**
(43) Date of publication of application: **28.10.2026**
(21) Application number: 25172327.6
(22) Date of filing: 24.04.2025
(51) Int. Cl.: G06N 3/0455, G06N 3/0475, G06N 3/09

(54) **ADAPTIVE SPLITTING**

(71) Applicant: Aleph Alpha GmbH, 69115 Heidelberg (DE)
(72) Inventor: METZEN, Jan-Hendrik, 69123 Heidelberg (DE); NEITEMEIER, Pit, 69123 Heidelberg (DE); BALLES, Lukas, 69123 Heidelberg (DE); EICHENBERG, Constantin, 69123 Heidelberg (DE)
(74) Representative: Bardehle Pagenberg Partnerschaft mbB Patentanwälte Rechtsanwälte

(57) **Abstract**

The present disclosure relates to a computer-implemented method for training a machine learning model, the method comprising: inputting a plurality of samples into the machine learning model; generating a plurality of latent representations for each of the samples; splitting the plurality of latent representations using entropy information of the sample to obtain a plurality of segments; aggregating two or more of the plurality of segments; generating output based on the aggregated segments; updating the machine learning model based on each of the outputs and the sample on which the output is based. The present disclosure also relates to a corresponding apparatus, computer program and computer readable medium.

## Description

### TECHNICAL FIELD

The present disclosure generally relates to the field of machine learning, and more particularly to techniques for adaptive splitting.

### BACKGROUND

Recent advancements in artificial intelligence, particularly in deep learning, have led to the development of large language models (LLMs). These models are designed to process and generate natural-language text by completing word sequences based on vast amounts of data. By training on diverse text datasets, LLMs learn statistical patterns in language, enabling them to perform a range of natural language processing tasks such as text generation, translation, summarization, and question-answering. As a result, LLMs have become invaluable in various fields, including customer service, content creation, and automated assistance. Their ability to generate contextually relevant and coherent responses makes them highly effective in applications where language understanding and generation are crucial.

In LLMs, input text is commonly split into smaller segments to, among other reasons, maintain computational efficiency. During this process, long input text is usually divided into overlapping or non-overlapping segments of fixed length. To reduce semantic fragmentation, splitting strategies may account for language boundaries, such as sentences or paragraphs. While early LLMs relied on simple sliding windows, more recent approaches incorporate smarter segmentation heuristics or hierarchical encoding structures to improve splitting.

A common problem is that the choice of splitting strategy favors one type of problem at the expense of another. There is no universal approach that would allow addressing different types of problems with the same splitting strategy. Different problems demand different trade-offs, and current methods lack the flexibility or adaptability to adjust to varying task objectives. As a result, splitting often becomes a limiting factor.

It is therefore an objective of the present disclosure to provide adaptive splitting, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

One aspect of the present disclosure relates to a method for training a machine learning model. The method may be computer implemented. The method may comprise inputting a plurality of samples into the machine learning model. The method may further comprise generating a plurality of latent representations for each of the samples. The method may further comprise splitting the plurality of latent representations using entropy information of the sample to obtain a plurality of segments. The method may further comprise aggregating two or more of the plurality of segments. The method may further comprise generating output based on the aggregated segments. The method may further comprise updating the machine learning model based on each of the outputs and the sample on which the output is based.

Generating a plurality of latent representations for each of the samples may represent the sample information in an improved manner and enable a more efficient processing of the sample information.

Splitting the plurality of latent representations may have the advantage of improving the accuracy of the output. More specifically, the improved accuracy may result from splitting each sample into smaller semantically meaningful segments. In this manner, the sample may be represented such that the machine learning model is better able to process the information.

Splitting the plurality of latent representations may also improve the compute efficiency. This may be because it is computationally less complex to process a plurality of smaller segments than a single large segment.

Splitting the plurality of latent representations using entropy information of the sample my further improve the above-mentioned advantages. This may be because the entropy information provides a measure of the information that is present in each sample. This may improve the splitting of the plurality of latent representations into semantically meaningful segments.

Aggregating two or more of the plurality of segments may have the advantage of representing the information that is contained in the sample in a more compact manner. This compact representation may decrease the amount of computational resources required to process the sample.

Generating output based on the aggregated segments may improve the accuracy of the output. This may in return improve the accuracy of the training process.

Updating the machine learning model based on each of the outputs and the sample on which the output is based may enable the machine learning model to learn the underlying pattern of the samples.

According to another aspect of the present disclosure, the method may further comprise obtaining the entropy information for each of the samples based on an intermediate prediction output generated for each of the samples.

Generating an intermediate prediction output for each of the samples may have the advantage of generating a more meaningful representation of each sample for completing the task of predicting the correct output. In contrast, when entropy information is obtained on raw sample data it may contain redundancies. Generating intermediate prediction outputs may improve the inherent information density by removing redundancies from the raw sample data.

According to another aspect of the present disclosure, the intermediate prediction output is generated by an encoder module.

Using an encoder module to generate the intermediate prediction output may improve the accuracy of the intermediate prediction output. This may be because an encoder module is specifically designed for extracting meaningful features and capturing the underlying information that is contained in the sample. A further advantage of using an encoder may be its seamless integration with other components of the machine learning model.

According to another aspect of the present disclosure, the entropy information is self-entropy information.

The entropy information being self-entropy information may have the advantage of providing information about the certainty or information content that is inherent in the sample. This information may improve the splitting of the latent representations.

According to another aspect of the present disclosure, the splitting of the latent representations is based on a splitting parameter configured to indicate the average splitting frequency.

Basing the splitting of the latent representations on a splitting parameter that is configured to indicate the average splitting frequency may provide flexibility and adaptability of the splitting step. The splitting parameter may not be learnable by the machine learning model. The splitting parameter may be determined by the user of the machine learning model. This may enable the user to lead the machine learning model into a specific direction. In this manner, the user may leverage the predictive capabilities of a machine learning model without being entirely reliable on the black-box characteristic of the machine learning model.

According to another aspect of the present disclosure, the method may further comprise determining, for each of the samples, a plurality of ranks based on the entropy information of the sample wherein the splitting of the latent representations is based on the ranks.

Determining, for each of the samples, a plurality of ranks based on the entropy information of the sample may have the advantage of further structuring the information that is contained in the sample.

Basing the splitting of the latent representations on the rank may have the advantage of improving the splitting. Improving the splitting may described as the ability of splitting the sample into semantically meaningful segments.

According to another aspect of the present disclosure, the ranks are determined using a ranking function, preferably a windowed rank function.

Determining the ranks using a ranking function may improve the ranking process. This may be because it makes the ranking itself more efficient.

Moreover, using a windowed rank function may provide the advantage of assigning a rank within sub-segment of the sample. Compared to a global ranking, windowed ranking ranks all elements in a subset. Such local ranking may provide the advantage of capturing more detailed information.

According to another aspect of the present disclosure, the splitting of the latent representations comprises splitting the latent representations if a rank of the plurality of ranks is larger than the splitting parameter.

Splitting the latent representations if a rank of the plurality of ranks is larger than the splitting parameter may have the advantage of adaptive splitting based on semantically meaningful information. More specifically, using a splitting parameter may provide the above-mentioned advantages regarding control and flexibility. In particular, connecting the splitting parameter with the rank may provide the advantage of using the semantically meaningful information that is contained in the rank information to perform a controlled splitting.

According to another aspect of the present disclosure, the output based on each of the samples is generated by the backbone of the machine learning model.

Using the backbone of the machine learning model to generate the output may improve the overall prediction result. Basing the generation of the output on the samples may improve the accuracy of output and decrease the required computational resources.

This may be because the samples are represented in such a manner that they contain a high information density and are semantically meaningful.

According to another aspect of the present disclosure, the backbone of the machine learning model is a sequence model, preferably a transformer.

The backbone of the machine learning model being a sequence model may further enable processing of sequential data. The backbone model preferably being a transformer may improve the prediction capabilities. This may be due to the improved prediction capabilities of the transformer architecture.

According to another aspect of the present disclosure, the sample and/or the output comprises natural language text.

The advantages that were mentioned with regard to any one of the previous aspects apply likewise. Further advantages may be applicable.

One aspect of the present disclosure relates to a method for generating output using a machine learning model, wherein the machine learning model has been trained according to method of any one of the aspects described herein. The method may further comprise providing an input. The method may further comprise generating the output based on the input.

The advantages that were mentioned with regard to any one of the previous aspects apply likewise. Further advantages may be applicable.

According to another aspect of the present disclosure, the input comprises the splitting parameter used in the training method to indicate the average splitting frequency.

The advantages that were mentioned with regard to any one of the previous aspects apply likewise. Further advantages may be applicable.

Another aspect of the present disclosure relates to a machine learning model trained according to the method of any one of the aspects described herein.

The advantages that were mentioned with regard to any one of the previous aspects apply likewise. Further advantages may be applicable.

Another aspect of the present disclosure relates to an apparatus comprising means for performing the method(s) of anyone of the aspects described herein.

The advantages that were mentioned with regard to any one of the previous aspects apply likewise. Further advantages may be applicable.

Another aspect of the present disclosure relates to a computer program comprising instructions which when executed by a computer cause the computer to perform the method of any one of the aspects described herein.

The advantages that were mentioned with regard to any one of the previous aspects apply likewise. Further advantages may be applicable.

Another aspect of the present disclosure relates to a computer-readable medium comprising a computer program, wherein the computer program comprises instructions which when executed by a computer cause the computer to perform the method of any one of the aspects described herein.

The advantages that were mentioned with regard to any one of the previous aspects apply likewise. Further advantages may be applicable.

### BRIEF DESCRIPTION OF THE DRAWINGS

The disclosure may be better understood by reference to the following drawings:
- Fig. 1:: A flowchart of a method for training a machine learning model in accordance with embodiments of the present disclosure.
- Fig. 2:: A flowchart of a method for generating an output using a machine-learning model in accordance with embodiments of the present disclosure.
- Fig. 3:: An exemplary machine learning model in accordance with embodiments of the present disclosure.
- Fig. 4:: A simplified overview of the functionality of a splitting step in accordance with embodiments of the present disclosure.
- Fig. 5:: An exemplary demonstration of the effects of training a machine learning model in accordance with embodiments of the present disclosure.
- Fig. 6:: An example computing device for training a machine learning model and/or generating an output using the machine learning model in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

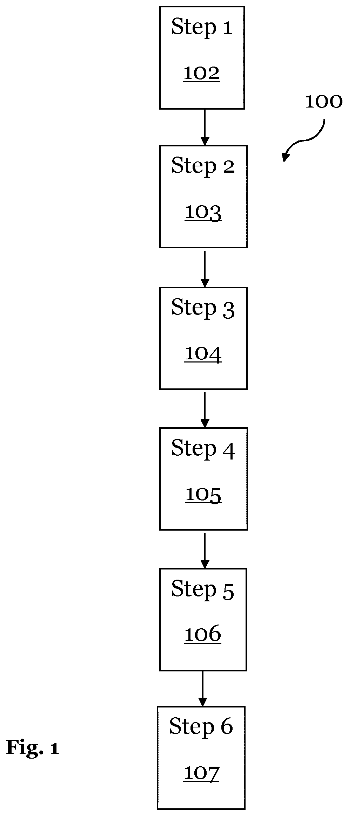

Fig. 1 illustrates a flowchart of a method 100 for training a machine learning model in accordance with an exemplary embodiment.

The method 100 may comprise inputting (step 102) a plurality of samples into the machine learning model. The method may further comprise (step 103) generating a plurality of latent representations for each of the samples. The method 100 may further comprise (step 104) splitting the latent representations using entropy information of the sample to obtain a plurality of segments. The method 100 may further comprise (step 105) aggregating two or more of the plurality of segments. The method 100 may further comprise (step 106) generating output based on the aggregated segments. The method 100 may further comprise (step 107) updating the machine learning model based on each of the outputs and the sample on which the output is based.

The method 100 may further comprise any aspects as described herein.

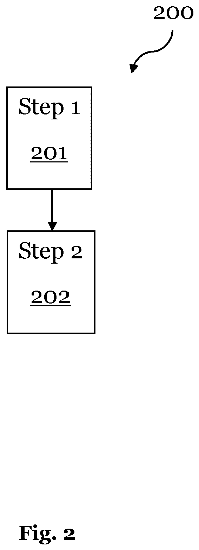

Fig. 2 illustrates a flowchart of a method 200 for generating output using a machine learning model in accordance with an exemplary embodiment.

The machine learning model may be trained according to the training method of any one of the aspects described herein (e.g., method 100 of Fig. 1). The method 200 may comprise providing (step 201) an input. The method 200 may further comprise generating (step 202) the output based on the input.

The method 200 may further comprise any aspects as described herein.

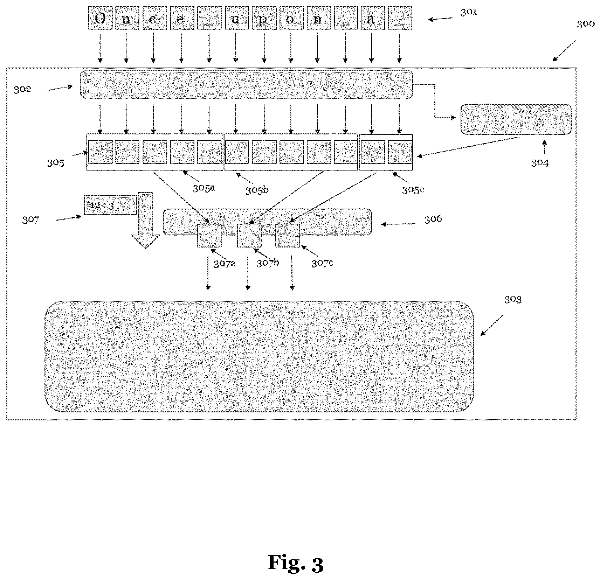

Fig. 3 illustrates an exemplary machine learning model 300 in accordance with an exemplary embodiment. The machine learning model 300 may be trained according to the training method of any one of the aspects described herein (e.g., method 100 of Fig. 1). As such, the machine learning model 300 may be configured (e.g., via training) to perform the method for generating output according to any of the aspects described herein (e.g., method 200 of Fig. 2).

The exemplary machine learning model 300 may be a sequence model, preferably a transformer, most preferably a hierarchical transformer.

The input may be any type of sequential data, preferably text data, most preferably natural language text data. The generated output may be any type of sequential data, preferably text data, most preferably natural language text data.

The exemplary machine learning model 300 comprises an encoder module 302 and a backbone 303. The encoder module may preprocess the input information 301. In particular, the encoder module may process raw input data into latent representations 305. The latent representations may subsequently be split and aggregated 306. The backbone may take the aggregated latent representations 307a, 307b, 307c as an input, processes the aggregated latent representations 307a, 307b, 307c and generate a final prediction output.

More specifically, during a splitting step 304, it is determined where to split the latent representations 305 into smaller semantically meaningful segments 305a, 305b, 305c. During an aggregation step 306, the latent representations of each segment are aggregated to obtain aggregated latent representations 307a, 307b, 307c. The aggregated latent representations are then further processed by the backbone of the machine learning model. Aggregation may take place using common aggregation methods such as means pooling.

The compression ratio 307 indicates the ratio between the number of latent representations 305 and the number of aggregated latent representations 307a, 307b, 307c. In other words, the compression ratio indicates by how much the aggregated latent representations 307a, 307b, 307c have been reduced in size compared to the original latent representation 305. Different compression ratios may be used during the training phase.

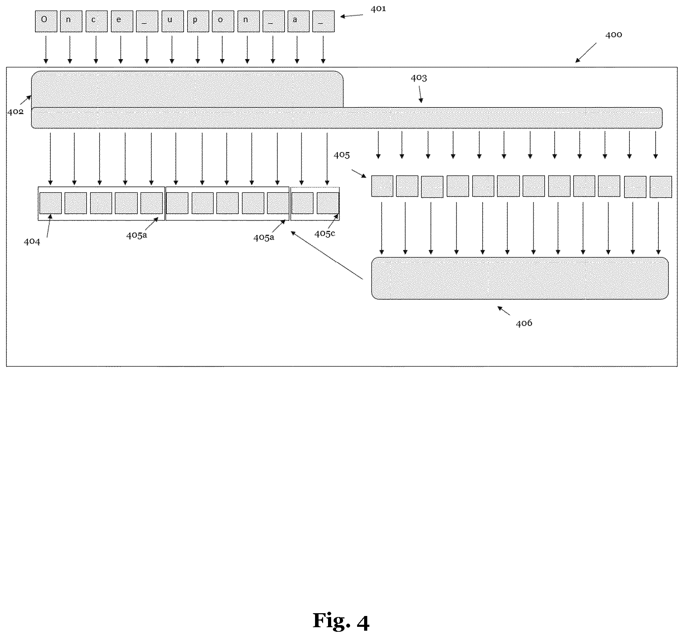

Fig. 4 illustrates a simplified overview of the functionality of a splitting step in accordance with embodiments of the present disclosure.

In the example, the input of the machine learning model is a string of text 401. More specifically, the string "Once upon a ". The string of text 401 may be represented in a standard encoding format such as UTF-8 format, which encodes characters as a sequence of one to four bytes. The string of text is merely an example and other types of input may be used.

The exemplary input text 401 is provided to the encoder module 402, which is comprised in the machine learning model 400. The encoder module 402 may comprise a language modelling head 403. Accordingly, the input text 401 is first processed by the encoder module 402.

More specifically, the encoder module 402 uses the string of text as an input and produces a prediction of the subsequent byte. Note that the encoder module 402 could also produce a prediction of a different number of bits. Predicting a subsequent byte is advantageous since the letters of the Latin alphabet are typically represented using one byte. This prediction may also be referred to as next-byte prediction.

For example, given the input text "Once upon a ", the encoder produces a prediction of the subsequent character. This means that the encoder determines a probability score for each possible next character. For example, the probability score for each possible character may look as follows for the first, second, third and fourth position, respectively: p₁ = [a = 0.03, b = 0.01 ..., o = 0.60, ...]), p₂ = [a = 0.02, b = 0.00 ..., n = 0.70, ...]), p₃ = [a = 0.00, b = 0.00 ..., c = 0.80, ...]), p₄ = [a = 0.00, b = 0.00 ..., e = 0.85, ...]). Figure 4 indicates each position by using an arrow, p₁ = first arrow, p₂ = second arrow and so on. In this manner, the encoder module 402 predicts a probability distribution for each next byte of the sample. More specifically, the language modelling head 403, which is comprised in the encoder module 402 may predict the respective probability distribution.

In an entropy step, the entropy information of the input text 401 is used to further process the sample. More specifically, the self-entropy 405 of each probability distribution is determined.

The self-entropy represents the level of certainty regarding the prediction of the respective position. In other words, the self-entropy score measures the uncertainty or unpredictability of a specific distribution. In the exemplary case, the probability distribution of the first position, [a = 0.03, b = 0.01..., o = 0.60, ...], may receive a self-entropy score of between 0 and log*_{b}*(*n*), wherein b represents the base of the logarithm that is used and n represents the number of distinct outcomes (i.e., number of possible next-bytes). 0 would describe no uncertainty whereas log*_{b}*(*n*) would describe maximum uncertainty. Accordingly, a possible self-entropy outcome of the example may be [0.1, 0.23, 0.3, 0.5]. 0.1 represents the self-entropy of the distribution for the first position, 0.23 represents the self-entropy of the distribution for the second position and so on. This way, the self-entropy score may provide information on which next bytes are difficult to predict. This information may improve the splitting.

In a subsequent ranking step 406, a ranking function is used to provide a rank to each self-entropy score 405. For example, [0.1, 0.23, 0.3, 0.5] may be ranked as [1, 3, 2, 4]. The ranking scores may be normalized such that they fall between 0 and 1, for example [0, 0.5, 0.25, 0.75]. In this manner, ranking may disambiguate the relative magnitude of the self-entropy scores. Preferably, a winnowed ranking function is used. This means, that there is no global ranking that includes all self-entropy scores but rather a local ranking that is based on a predetermined number of self-entropy scores. For example, the window size may be determined to be 3. Accordingly, the first 3 self-entropy scores are ranked first. The window is moved to the next 3 self-entropy scores which are ranked next, and so on.

In a subsequent splitting step, the splitting of the latent representations 404 into semantically meaningful segments is performed based on the ranks. For this purpose, a splitting parameter indicating where to split the latent representations 404 may be used. The splitting parameter may correspond to the scale that is used for the ranking score. The splitting parameter may be a number between 0 and 1. The splitting parameter may indicate where to split the latent representations. The splitting parameter may be provided by a user. For example, the latent representations 404 may be split before or after the position at which the rank of the self-entropy of the probability distribution is equal to or larger than the splitting parameter 405a, 405b, 405c. For example, if the ranking results in following four segments [1, 3, 2, 4, 3, 2, 4, 1, 2, 1, 3, 4], the splitting is performed before a position at which the rank is equal or larger than the splitting parameter and the splitting parameter is set to 3, the splits look as follows: [1], [3, 2], [4] , [3, 2] , [4, 1, 2, 1], [3], [4].

This way, the input text 401 is split in a semantically meaningful manner.

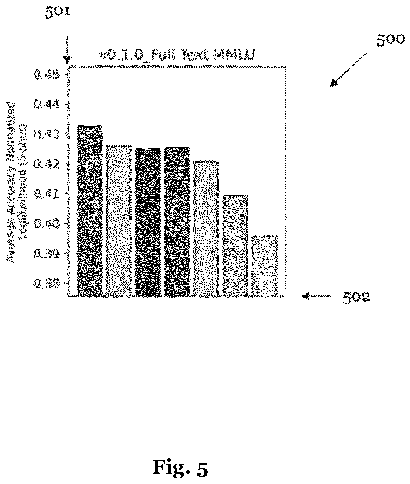

As shown in figure 3, the split latent representations 404 are subsequently aggregated 307a, 307b, 307c and provided to the backbone model 303. The preprocessing of the samples improves accuracy and compute performance. In other words, splitting the samples in the above-described manner increases accuracy of the prediction during inference while maintaining the amount of required computational resources, as described in more detail in figure 5.

Fig. 5 illustrates the effects of incorporating splitting and aggregation steps in accordance with embodiments of the present disclosure.

More specifically, figure 5 shows a graph 500 that illustrates the accuracy 501 on the y-axis and the compression rate 502 on the x-axis, increasing from left to right. The first bar has a compression rate of 4.0, the subsequent bars have compression rates of 5, 6, 7, 8, 9 and 10, respectively.

It can generally be seen that a higher compression rate leads to a lower accuracy. For example, compression rates of 9 and 10 lead to accuracy scores of around 0.41 and 0.395, respectively. In contrast, a compression rate of 4 or 5 lead to accuracy scores of around 0.425 and 0.432, respectively.

However, it can also be observed that the accuracy rates do not differ substantially (i.e., compression rate = 4 and accuracy ca. 0.435, compression rate = 10 and accuracy ca. 0.396). Maintaining a high level of accuracy while increasing the compression rate may only be possible when the splitting is performed in a semantically meaningful manner. The presented splitting step provides for such semantically meaningful splitting.

Accordingly, a lower compression rate leads to a higher number of aggregated latent representations that are processed by the backbone (i.e., higher sequence length). This provides the backbone with more detailed information, which leads to an increased accuracy. However, processing the more detailed information also requires more computing resources.

In contrast, a higher compression rate leads to a lower number of aggregated latent representations that are processed by the backbone (i.e., lower sequence length). This provides the backbone with less detailed information, which leads to a decreased accuracy. However, processing less detailed information requires fewer computing resources.

Hence, the ability to adjust the compression rate enables selective saving of computational resources. The value of the compression rate may depend on the complexity of the task that the machine learning model is trained for. If the machine learning model is trained for a more complex task, the compression ratio should be low, such that the required level of accuracy is achieved. However, if the complexity of the task is rather low, the compression ratio may be increased.

This enables the training of the machine learning model with less resources, while achieving an acceptable accuracy for the low complexity task.

In other words, if there was no option of setting the compression ratio, the machine learning model performing the low complexity task would have been trained using the same compression rate that is used to train the machine learning model performing the high complexity task. By enabling an adaptive compression rate including semantically meaningful splitting, the low task complexity model may be trained using a higher compression ratio, which decreases the required resources while still achieving the desired accuracy.

Finally, the training data set comprises a plurality of samples. The samples may comprise any type of sequential data, preferably text data, most preferably natural language text data. An example of a sample may be a news article or a chapter of a textbook. During training, the weights and biases of the machine learning model are iteratively adjusted based on a loss function that is uses the difference between the sample and the prediction of the machine learning model. The loss function may be a standard loss function such as cross-entropy loss. An auxiliary loss may be used to train the language modelling head that predicts the intermediate probabilities. Moreover, the machine learning model may be trained using a standard training algorithm such as Adam optimizer.

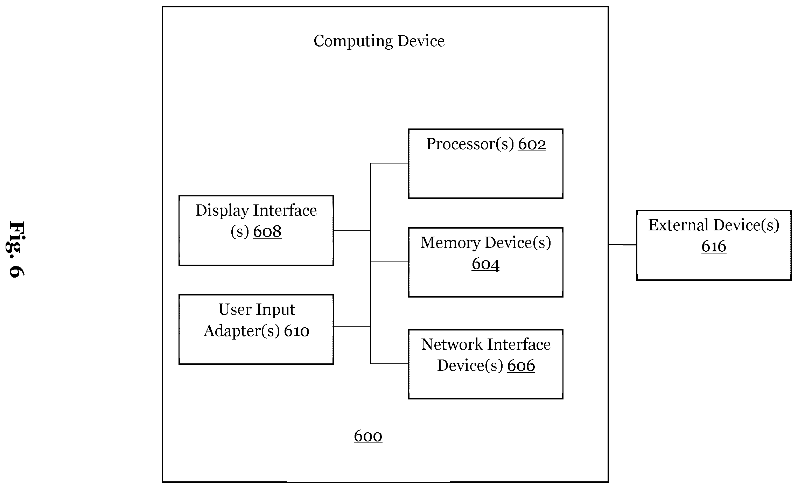

Fig. 6 illustrates block diagram of an example computing device 600 for training a machine learning model and/or generating a natural-language based output using the machine learning model in accordance with an exemplary embodiment. The computing device 600 may also be referred to, for example as an "apparatus", "computing device", "computer system", or "computing system". The computing device 600 may comprise means for performing the method of any one of the aspects described herein (e.g., methods 100, 200). Examples for these means are given in the following.

In some embodiments, the computing device 600 includes one or more of the following: one or more processors 602 (which may be referred to as "hardware processors" or individually as a "hardware processor"); one or more memory devices 604; one or more network interface devices 606; one or more display interfaces 608; and one or more user input adapters 610. Additionally, in some embodiments, the computing device 600 is connected to or includes a display device, input devices, etc. These elements (e.g., the processors 602, memory devices 604, network interface devices 606, display interfaces 608, user input adapters 610) are hardware devices (for example, electronic circuits or combinations of circuits) that are configured to perform various different functions for the computing device 600. In some embodiments, these components of the computing device 600 may be collectively referred to as computing resources e.g., resources that are used to carry out execution of instructions and include the processors (one or more processors 602), storage (one or more memory devices 604), and I/O (network interface devices 606, one or more display interfaces 608, and one or more user input adapters 610).

In some instances, the term processing resources may be used interchangeably with the term computing resources. In some embodiments, multiple instances of computing device 600 may arranged into a distributed computing system. Computing device 600 may be configured to communicate with one or more external devices 616. External devices 616 can be other instances of computing device or may be different (e.g., just storage devices, sensors, etc.). In some examples, computing device 600 includes multiple computing devices 600. As an example, a computing device 600 includes different architectures that may be used in cloud computing environments.

In some embodiments, each or any of the processors 602 is or includes, for example, a single- or multi-core processor, a microprocessor (e.g., which may be referred to as a central processing unit or CPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). And/or, in some embodiments, each or any of the processors 602 uses an instruction set architecture such as x86 or Advanced RISC Machine (ARM).

In some embodiments, each or any of the memory devices 604 is or includes a random access memory (RAM) (such as a Dynamic RAM (DRAM) or Static RAM (SRAM)), a flash memory (based on, e.g., NAND or NOR technology), a hard disk, a magnetooptical medium, an optical medium, cache memory, a register (e.g., that holds instructions), or other type of device that performs the volatile or non-volatile storage of data and/or instructions (e.g., software that is executed on or by processors 602). Memory devices 604 are examples of non- transitory computer-readable storage media.

In some embodiments, each or any of the network interface devices 606 includes one or more circuits (such as a baseband processor and/or a wired or wireless transceiver), and implements layer one, layer two, and/or higher layers for one or more wired communications technologies (such as Ethernet (IEEE 802.3)) and/or wireless communications technologies (such as Bluetooth, WiFi (IEEE 802.11), GSM, CDMA2000, UMTS, LTE, LTE-Advanced (LTE-A), LTE Pro, Fifth Generation New Radio (5G NR) and/or other short-range, mid-range, and/or long-range wireless communications technologies).

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented method (200) for training a machine learning model, the method comprising:
inputting (102) a plurality of samples into the machine learning model;
generating (103) a plurality of latent representations for each of the samples;
splitting (104) the plurality of latent representations using entropy information of the sample to obtain a plurality of segments;
aggregating (105) two or more of the plurality of segments;
generating (106) output based on the aggregated segments;
updating (107) the machine learning model based on each of the outputs and the sample on which the output is based.

2. The method of the preceding claim, further comprising:
obtaining the entropy information for each of the samples based on an intermediate prediction output generated for each of the samples.

3. The method of the preceding claim, wherein the intermediate prediction output is generated by an encoder module.

4. The method of any one of the preceding claims, wherein the entropy information is self-entropy information.

5. The method of any one of the preceding claims, wherein the splitting of the latent representations is based on a splitting parameter configured to indicate the average splitting frequency.

6. The method of any one of the preceding claims, further comprising:
determining, for each of the samples, a plurality of ranks based on the entropy information of the sample;
wherein the splitting of the latent representations is based on the ranks.

7. The method of the preceding claim, wherein the ranks are determined using a ranking function, preferably a windowed rank function.

8. The method of claim 5 and claim 6 or claim 7, wherein the splitting of the latent representations comprises splitting the latent representations if a rank of the plurality of ranks is larger than the splitting parameter.

9. The method of any one of the preceding claims, wherein the output based on each of the samples is generated by the backbone of the machine learning model.

10. The method of any one of the preceding claims, wherein the backbone of the machine learning model is a sequence model, preferably a transformer; and/or
wherein the sample and/or the output comprises natural language text.

11. A computer-implemented method (200) for generating output using a machine learning model, wherein the machine learning model has been trained according to method of any one of the preceding claims, the method comprising:
providing (201) an input;
generating (202) the output based on the input.

12. The method of the preceding claim, wherein the machine learning model has been trained according to the method of claim 5 and the input comprises the splitting parameter used in the training method to indicate the average splitting frequency.

13. A machine learning model trained according to the method of any one of claims 1 to 10.

14. An apparatus (500) configured to perform the methods of any one of claims 1 to 10, claims 11 or 12.

15. A computer program or a computer-readable medium comprising a computer program, wherein the computer program comprises instructions which when executed by a computer cause the computer to perform the methods of any one of claims 1 to 10, claim 11 or 12.
